# EUROPEAN PATENT APPLICATION

(11) **EP 2 883 599 A2**
(43) Date of publication of application: **17.06.2015**
(21) Application number: 14193253.3
(22) Date of filing: 14.11.2014
(51) Int. Cl.: B01D 69/08, B01D 71/34

(54) **Polymer resin composition for preparing hollow fiber membrane, preparation method of hollow fiber membrane, and hollow fiber membrane**

(30) Priority: 25.11.2013 KR 20130143816; 25.11.2013 KR 20130143818
(71) Applicant: Lotte Chemical Corporation of (Sindaebang-dong), Dongjak-gu Seoul 156-711 (KR)
(72) Inventor: Lee, Jin Won, Daejeon 305-720 (KR); Park, Bum Jin, Daejeon 305-720 (KR)
(74) Representative: Kling, Simone

(57) **Abstract**

The present invention relates to a polymer resin composition for preparing a hollow fiber membrane, including: a vinylidene fluoride-based polymer resin; a good solvent; a poor solvent; and one or more compounds selected from the group consisting of a bicycloalkane having 5 to 15 carbons mono- or poly-substituted with a carboxylic acid metal salt functional group and a peroxide, a preparation method of a hollow fiber membrane using the polymer resin composition, and a hollow fiber membrane obtained therefrom.

## Description

### CROSS REFERENCE TO RELATED APPLICATION

The present application claims priority to Korean Patent Application No. 10-2013-0143816 filed on November 25, 2013 and Korean Patent Application No. 10-2013-0143818 filed on November 25, 2013, the entire contents of which is incorporated herein for all purposes by thess references.

### TECHNICAL FIELD

The present invention relates to a polymer resin composition for preparing a hollow fiber membrane, a preparation method of a hollow fiber membrane, and a hollow fiber membrane, and more particularly, to a hollow fiber membrane having high strength and excellent chemical resistance, and implementing high water permeability, thereby enabling a stable and efficient water treatment, a polymer resin composition capable of providing such hollow fiber membrane, and a preparation method of the hollow fiber membrane.

### BACKGROUND

Due to development of industry and population growth, an efficient water use and treatment technology is drawing attention. Recently, an application of separation membrane technology has gradually increased, in order to secure stability of water quality in water treatment, sewage and wastewater treatment, a seawater desalination process, and the like. In separation membrane technology, a hollow fiber separation membrane has been particularly much studied, since it has large area per unit volume, has low occurrence of severe membrane fouling, and is easy to wash.

Generally, in order to control the membrane fouling, the membrane is physically and chemically treated, which leads to shortened membrane life. Thus, recently, much research for a preparation technology of a PVDF (polyvinylidene fluoride) hollow fiber membrane with excellent strength and chemical resistance has been conducted. As a preparation method of the PVDF hollow fiber separation membrane, thermally induced phase separation wherein a polymer is melted at a high temperature, extruded from a nozzle, and coagulated in a non solvent, thereby forming a porous structure, is generally used.

Said thermally induced phase separation cools and coagulates a polymer resin through a quenching process, after melting and extruding the polymer resin, while extracting a diluent in a polymer solution therefrom, thereby crystallizing a polymer and separating phases.

Such a phase separation mechanism is classified into solid-liquid phase separation and liquid-liquid phase separation, and the final structure of the hollow fiber membrane is formed differently depending on the phase separation mechanism. In case of a composition generating liquid-liquid phase separation, a porous structure is generated by growth of phase-separated liquid drops. In case of a composition generating solid-liquid phase separation, a structure having micropores is formed due to the fact that crystallization occurs immediately without phase separation of liquid drops.

Recently, the industry has increasingly demanded a technique of preparing a PVDF hollow fiber separation membrane with excellent strength and chemical resistance in an economical manner, and development of a method to solve the limitation of the previously known thermally induced phase separation is actually required.

### SUMMARY OF THE INVENTION

The present invention has been made in an effort to provide a polymer resin composition for preparing a hollow fiber membrane having advantages of having high strength and excellent chemical resistance, and implementing high water permeability, thereby providing a hollow fiber membrane enabling stable and efficient water treatment.

Further, the present invention has been made in an effort to provide a preparation method of a hollow fiber membrane having advantages of having high strength and excellent chemical resistance, and implementing high water permeability, thereby providing a hollow fiber membrane enabling stable and efficient water treatment.

Further, the present invention has been made in an effort to provide a hollow fiber membrane having advantages of having high strength and excellent chemical resistance, and implementing high water permeability, thereby enabling stable and efficient water treatment.

There is provided a polymer resin composition for preparing a hollow fiber membrane, including 10 to 70 % by weight of a vinylidene fluoride-based polymer resin, 1 to 50 % by weight of a good solvent, 1 to 75 % by weight of a poor solvent, and 0.001 to 5 % by weight of one or more compounds selected from the group consisting of a bicycloalkane having 5 to 15 carbons mono- or poly-substituted with a carboxylic acid metal salt functional group and a peroxide.

The vinylidene fluoride-based polymer resin includes one or more selected from the group consisting of a vinylidene fluoride homopolymer and a vinylidene fluoride copolymer.

The vinylidene fluoride-based polymer resin has a weight average molecular weight of 100,000 to 1,000,000.

The good solvent includes one or more selected from the group consisting of N-methyl-2-pyrrolidone, dimethylformamide, N,N'-dimethyl acetamide, dimethyl sulfoxide, and hexamethylphosphoric triamide.

The poor solvent includes one or more selected from the group consisting of dibutyl phthalate, dimethyl phthalate, dioctyl sebacate, dioctyl adipate, gamma-butyrolactone, and propylene carbonate.

The bicycloalkane having 5 to 15 carbons mono- or poly-substituted with a carboxylic acid metal salt functional group includes bicyclo[2.2.1]heptane or bicyclo[2.2.2]octane mono- to tetra-substituted with a functional group selected from the group consisting of a lithium carboxylate group, a sodium carboxylate group, and a potassium carboxylate group.

The peroxide includes one or more compounds selected from the group consisting of diisobutyl peroxide, t-amyl peroxydicarbonate, di(4-t-butylcyclohexyl)peroxydicarbonate, diethylhexyl peroxydicarbonate, dibutyl peroxydicarbonate, diisopropyl peroxydicarbonate, dicetyl peroxydicarbonate, dimyristyl peroxydicarbonate, t-butyl peroxyneoheptanoate, t-amyl peroxypivalate, t-butyl peroxypivalate, dilauroyl peroxide, didecanoyl peroxide, 2,5-dimethyl-2,5-di(2-ethylhexanoylperoxy)hexane, 2,5-dimethyl-2,5-di(tert-butylperoxy)hexane, 1,1,3,3-tetramethylbutyl peroxy-2-ethylhexanoate, t-amylperoxy-2-ethylhexanoate, dibenzoyl peroxide, t-butyl peroxy-2-ethylhexanoate, t-butyl peroxydiethyl acetate, t-butyl peroxyisobutylate, and 1,4-di(t-butylperoxycarbo)cyclohexane.

There is also provided a preparation method of a hollow fiber membrane, including: heating the polymer resin composition for preparing the hollow fiber membrane to 50 to 175 °C; mixing the heated polymer resin composition for preparing the hollow fiber membrane with an internal coagulant; and spinning the polymer resin composition for preparing the hollow fiber membrane mixed with the internal coagulant in a wet coagulation bath.

The internal coagulant includes one or more selected from the group consisting of a good solvent and a non-solvent.

The non-solvent includes one or more selected from the group consisting of water, ethylene glycol, an alcohol solvent, a ketone solvent, and polyalkylene glycol.

The preparation method of the hollow fiber membrane further comprises maintaining the polymer resin composition for preparing the hollow fiber membrane mixed with the internal coagulant at a temperature of 5 to 30 °C.

The wet coagulation bath is filled with water and maintained at a temperature of-10 to 30 °C.

There is provided a hollow fiber membrane, including: a polymer base containing a vinylidene fluoride-based polymer resin and a bicycloalkane having 5 to 15 carbons mono- or poly-substituted with a carboxylic acid metal salt functional group; or a polymer base containing a crosslinked product between decomposed divided bodies of a vinylidene fluoride-based polymer resin by a peroxide, wherein the hollow fiber membrane has an outer diameter of 0.5 to 6 mm and an inner diameter of 0.3 to 6 mm.

The crosslinked product is a crosslinked copolymer formed by bonding decomposed divided bodies of the vinylidene fluoride-based polymer resin to each other.

The pores have a maximum diameter of 0.01 to 5.0 µm are distributed on the polymer base.

The hollow fiber membrane has cutting strength of 8.50 N/mm² or more.

The hollow fiber membrane has a pure water permeation flux of 250 to 1500 L/m2*h (60 cmHg).

### BRIEF DESCRIPTION OF THE DRAWINGS

FIG. 1 represents a SEM image (x 50) of a cross-section of the hollow fiber separation membrane of Example 1.
FIG. 2 represents an enlarged SEM image (x 2000) of a cross-section of the hollow fiber separation membrane of Example 1.
FIG. 3 represents an enlarged SEM image (x 2000) of a cross-section of the hollow fiber separation membrane of Example 2.
FIG. 4 is a photograph of a cross-section of the PVDF hollow fiber membrane prepared in Example 4 taken by an electron microscope (x 2000).
FIG. 5 is an enlarged photograph of the part of FIG. 4.

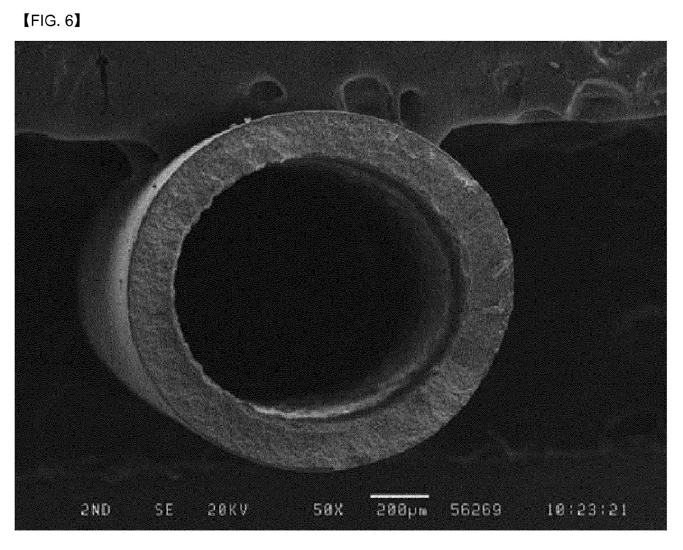

FIG. 6 is a photograph of a cross-section of the PVDF hollow fiber membrane prepared in Comparative Example 2 taken by an electron microscope (x 50).

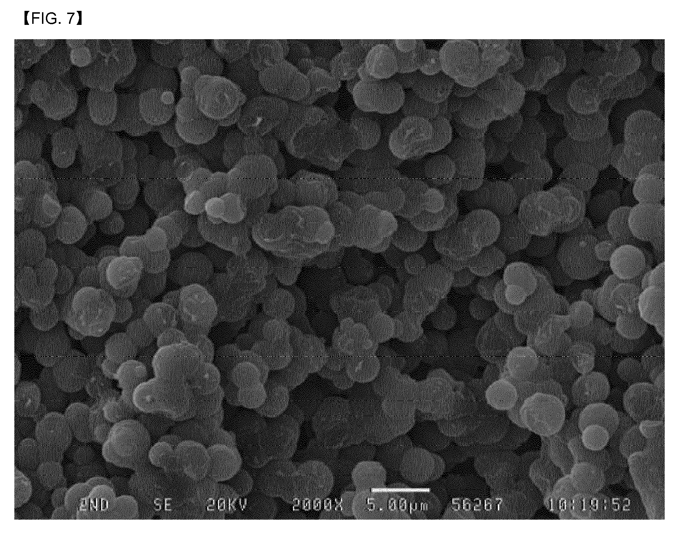

FIG. 7 is a photograph of a cross-section of the PVDF hollow fiber membrane prepared in Comparative Example 2 taken by an electron microscope (x 2000).

### DETAILED DESCRIPTION OF THE INVENTION

Hereinafter, a polymer resin composition for preparing a hollow fiber membrane, a preparation method of a hollow fiber membrane, and a hollow fiber membrane according to specific exemplary embodiments of the present invention will be described in more detail.

According to one exemplary embodiment of the present invention, a polymer resin composition for preparing a hollow fiber membrane, including 10 to 70 % by weight of a vinylidene fluoride-based polymer resin, 1 to 50 % by weight of a good solvent, 1 to 75 % by weight of a poor solvent, and 0.001 to 5 % by weight of one or more compounds selected from the group consisting of a bicycloalkane having 5 to 15 carbons mono- or poly-substituted with a carboxylic acid metal salt functional group and a peroxide, may be provided.

It was common in previously known thermally induced phase separation to use inorganic fine particles in order to form numerous pores in a hollow fiber membrane, however, in case of using such inorganic fine particles, there were certain limitations on increase in dispersibility and compatibility in a polymer solution or a spinning solvent, and of difficulty in forming uniform pores on a hollow fiber membrane to be prepared.

Therefore, the present inventors proceeded with a study on preparation of a hollow fiber membrane, and as a result, have found through an experiment that by using a polymer resin composition including a bicycloalkane having 5 to 15 carbons mono- or poly-substituted with a carboxylic acid metal salt functional group and/or a peroxide in combination with a vinylidene fluoride-based polymer resin, a good solvent, and a poor solvent in the preparation of the hollow fiber membrane, the strength and the chemical resistance of the hollow fiber membrane to be prepared may be greatly improved, and also high water permeability may be implemented, so that stable and efficient water treatment is realized, and thus completed the present invention.

By using the bicycloalkane having 5 to 15 carbons mono- or poly-substituted with a carboxylic acid metal salt functional group, the crystallinity and the crystallization rate of the polymer resin contained in a base of the hollow fiber membrane may be accelerated, a crystal size may be refined, and thus the strength and the chemical resistance of the hollow fiber membrane may be improved.

The carboxylic acid metal salt functional group means a metal carboxylate functional group, and specifically it may be a lithium carboxylate group, a sodium carboxylate group, or a potassium carboxylate group.

The bicycloalkane means a compound wherein two aliphatic rings are bonded, and a specific example of the bicycloalkane having 5 to 15 carbons may include bicyclo[2.2.1]heptane or bicyclo[2.2.2]octane.

Specifically, the bicycloalkane having 5 to 15 carbons mono- or poly-substituted with a carboxylic acid metal salt functional group may include bicyclo[2.2.1]heptane or bicyclo[2.2.2]octane mono- to tetra-substituted with one functional group selected from the group consisting of a lithium carboxylate group, a sodium carboxylate group, and a potassium carboxylate group.

Meanwhile, the polymer resin composition for preparing the hollow fiber membrane of the one exemplary embodiment may include 0.001 to 5 % by weight, or 0.01 to 3 % by weight, of the bicycloalkane having 5 to 15 carbons mono- or poly-substituted with a carboxylic acid metal salt functional group. If the content of the bicycloalkane having 5 to 15 carbons mono- or poly-substituted with a carboxylic acid metal salt functional group is too low, the action or the effect as described above may be marginal. Further, if the content of the bicycloalkane having 5 to 15 carbons mono- or poly-substituted with a carboxylic acid metal salt functional group is too high, undissolved floating matter may be generated in the polymer resin composition for preparing the hollow fiber membrane, which may cause rupture of the hollow fiber membrane in a spinning process, or generation of non-uniform or huge bubbles in the hollow fiber membrane.

Further, in case of using a peroxide together with the vinylidene fluoride-based polymer resin in the polymer resin composition, the chain of the vinylidene fluoride-based polymer resin may be broken by a radical reaction to form a vinylidene fluoride-based polymer resin with a short chain and a vinylidene fluoride-based polymer resin with a long chain. Since the vinylidene fluoride-based polymer resin has a hydrofluoro atom, it may form a strong hydrogen bond, and thus the vinylidene fluoride-based polymer resin with a short chain and the vinylidene fluoride-based polymer resin with a long chain formed as above may bond to each other, or crosslink to each other, so that the finished hollow fiber membrane has higher mechanical strength.

Further, as the peroxide is used, the crystallinity and the crystallization rate of the polymer resin contained in the base of the hollow fiber membrane may be accelerated, and the crystal size may be refined, and accordingly, the strength and the chemical resistance of the hollow fiber membrane may be improved. The thus-prepared hollow fiber membrane may implement high water permeability to realize stable and efficient water treatment.

As the peroxide, any compound to be used as a radical reaction initiator may be used without a strict limitation, and for example, diisobutyl peroxide, t-amyl peroxydicarbonate, di(4-t-butylcyclohexyl)peroxydicarbonate, diethylhexyl peroxydicarbonate, dibutyl peroxydicarbonate, diisopropyl peroxydicarbonate, dicetyl peroxydicarbonate, dimyristyl peroxydicarbonate, t-butyl peroxyneoheptanoate, t-amyl peroxypivalate, t-butyl peroxypivalate, dilauroyl peroxide, didecanoyl peroxide, 2,5-dimethyl-2,5-di(2-ethylhexanoylperoxy)hexane, 2,5-dimethyl-2,5-di(tert-butylperoxy)hexane, 1,1,3,3-tetramethylbutyl peroxy-2-ethylhexanoate, t-amylperoxy-2-ethylhexanoate, dibenzoyl peroxide, t-butyl peroxy-2-ethylhexanoate, t-butyl peroxydiethyl acetate, t-butyl peroxyisobutylate, 1,4-di(t-butylperoxycarbo)cyclohexane, or a mixture of two or more thereof, may be included.

Meanwhile, the polymer resin composition for preparing the hollow fiber membrane of the one exemplary embodiment may include 0.001 to 5 % by weight, or 0.01 to 3 % by weight, of the peroxide. If the content of the organic peroxide is too low, the action or the effect of the use of the peroxide as described above may be marginal. Further, if the content of the peroxide is too high, the polymer resin may be decomposed by the peroxide into a low molecular weight material, or a crosslinking reaction may be generated to make the viscosity of the polymer resin composition non-uniform, causing rupture of the hollow fiber membrane in a spinning process, or generation of huge bubbles.

The vinylidene fluoride-based polymer resin means a polymer or a copolymer containing a vinylidene fluoride repeating unit, and specifically the vinylidene fluoride-based polymer resin may include a vinylidene fluoride homopolymer, a vinylidene fluoride copolymer, or a mixture thereof.

The vinylidene fluoride copolymer includes a vinylidene fluoride monomer and another monomer, for example, tetrafluoroethylene, propylene hexafluoride, ethylene trifluoride, or ethylene chloride trifluoride.

The vinylidene fluoride-based polymer resin may have a weight average molecular weight of 100,000 to 1,000,000, or 250,000 to 800,000, or 300,000 to 600,000. If the weight average molecular weight of the vinylidene fluoride-based polymer resin is too low, the mechanical properties, the chemical resistance, or the like of the hollow fiber membrane to be prepared may not be sufficiently secured. Further, if the weight average molecular weight of the vinylidene fluoride-based polymer resin is too high, the viscosity of the polymer resin composition for preparing the hollow fiber membrane of the one exemplary embodiment, or the spinning solution prepared therefrom, may be so high that it is difficult to prepare the hollow fiber membrane.

The polymer resin composition for preparing the hollow fiber membrane of the one exemplary embodiment may include 10 to 70 % by weight, or 25 to 50 % by weight, of the vinylidene fluoride-based polymer resin.

If the content of the vinylidene fluoride-based polymer resin in the polymer resin composition for preparing the hollow fiber membrane of the one exemplary embodiment is too low, the mechanical properties or the chemical resistance of the hollow fiber membrane to be prepared may be difficult to be sufficiently secured, or it may not be easy to form the polymer base of the hollow fiber membrane. Further, if the content of the vinylidene fluoride-based polymer resin in the polymer resin composition for preparing the hollow fiber membrane of the one exemplary embodiment is too high, a phase transition rate in the thermally induced phase separation using the polymer resin composition for preparing the hollow fiber membrane may be significantly lowered, or the size of pores formed in the hollow fiber membrane to be prepared may be very small, so that water treatment performance is degraded.

As the good solvent, a solvent known as being capable of dissolving the polyvinylidene fluoride resin may be used, and it is preferred to select a solvent having a total solubility parameter of 21 to 27 MPa^{1/2}, and a boiling point of 130 to 230 °C, as the good solvent.

A specific example of the usable good solvent may include N-methyl-2-pyrrolidone, dimethylformamide, N,N'-dimethyl acetamide, dimethyl sulfoxide, hexamethylphosphoric triamide, or a mixture of two or more thereof.

The polymer resin composition for preparing the hollow fiber membrane of the one exemplary embodiment may include 1 to 70 % by weight, or 10 to 60 % by weight, of the good solvent. If the content of the good solvent in the polymer resin composition is too low, flowability of the polymer resin composition or the spinning solution using the composition may be lowered, and thus a kneading temperature should be raised. Further, if the content of the good solvent in the polymer resin composition is too high, a phase transition rate in the thermally induced phase separation using the polymer resin composition or the spinning solution using the composition may be excessively high, or the size of the pores formed in the hollow fiber membrane to be prepared may be very large, so that water treatment performance is degraded.

The poor solvent has a property of having no solvency of a polymer at room temperature, but having solvency of a polymer at high temperature. In the thermally induced phase separation (TIPS), the poor solvent may implement functions of forming pores in the polymer separation membrane, improving flowability of the spinning solution, and lowering a melting point of the polymer.

A specific example of the poor solvent may include dibutyl phthalate, dimethyl phthalate, dioctyl sebacate, dioctyl adipate, gamma-butyrolactone, propylene carbonate, or a mixture of two or more thereof.

The polymer resin composition for preparing the hollow fiber membrane of the one exemplary embodiment may include 1 to 75 % by weight, or 10 to 60 % by weight, of the poor solvent. If the content of the poor solvent in the polymer resin composition is too low, the porosity of the hollow fiber membrane may be lowered, or pores may not be properly formed, so that a permeation flow rate is reduced. Further, if the content of the poor solvent in the polymer resin composition is too high, the flowability of the polymer resin composition or the spinning solution using the composition may be lowered, and thus a kneading temperature should be raised; or a phase transition rate in the thermally induced phase separation using the polymer resin composition or the spinning solution using the composition may be excessively high, or the size of the pores formed in the hollow fiber membrane to be prepared may be very large, so that a water treatment performance is degraded.

The polymer resin composition for preparing the hollow fiber membrane of the one exemplary embodiment may further include an additive such as a plasticizer, a compatibilizer, or a dispersant.

According to another exemplary embodiment of the present invention, a preparation method of a hollow fiber membrane, including: heating the polymer resin composition for preparing the hollow fiber membrane of the one exemplary embodiment as described above to 50 to 175 °C; mixing the heated polymer resin composition for preparing the hollow fiber membrane with an internal coagulant; and spinning the polymer resin composition for preparing the hollow fiber membrane mixed with the internal coagulant in a wet coagulation bath, may be provided.

As described above, the hollow fiber membrane prepared by the thermally induced phase separation, using the polymer resin composition including bicycloalkane having 5 to 15 carbons mono- or poly-substituted with a carboxylic acid metal salt functional group and/or a peroxide in combination with the vinylidene fluoride-based polymer resin, the good solvent, and the poor solvent, may have significantly improved strength and chemical resistance, and also high water permeability, thereby realizing stable and efficient water treatment.

In particular, by using the bicycloalkane having 5 to 15 carbons mono- or poly-substituted with a carboxylic acid metal salt functional group and/or a peroxide, the crystallinity and the crystallization rate of the polymer resin contained in the base of the hollow fiber membrane may be accelerated, a crystal size may be refined, and thus the strength and the chemical resistance of the hollow fiber membrane may be improved.

The details of the polymer resin composition for preparing the hollow fiber membrane of the one exemplary embodiment include all the above description.

The polymer resin composition for preparing the hollow fiber membrane may be converted into a polymer spinning solution form, through heating the polymer resin composition for preparing the hollow fiber membrane to 50 to 175 °C, or 100 to 171 °C.

If the heating temperature of the polymer resin composition for preparing the hollow fiber membrane is too low, the viscosity of the polymer resin composition may not be sufficiently lowered, so that spinning is difficult, and using the spinning solution obtained by applying the low heating temperature may lead to pores to be insufficiently formed, or a non-uniform or improper size of pores to be formed in the hollow fiber membrane to be prepared therefrom. Further, if the heating temperature of the polymer resin composition for preparing the hollow fiber membrane is too high, the components included in the polymer resin composition for preparing the hollow fiber membrane may be decomposed.

The heated polymer resin composition for preparing the hollow fiber membrane may be mixed with an internal coagulant before being spun in a wet coagulation bath. Mixing the heated polymer resin composition for preparing the hollow fiber membrane with the internal coagulant may be carried out in the internal coagulation bath, or a spinning nozzle serving as the internal coagulation bath.

The mixing weight ratio between the heated polymer resin composition for preparing the hollow fiber membrane and the internal coagulant may be varied with the characteristics or physical properties of the hollow fiber membrane to be prepared, and for example, is 2:1 to 1:10.

The internal coagulant may be a good solvent, a non-solvent, or a mixture of a good solvent and a non-solvent, and is preferably a mixture of a good solvent and a non-solvent.

The good solvent usable as the internal coagulant may be the good solvent included in the polymer resin composition for preparing the hollow fiber membrane of the one exemplary embodiment.

The non-solvent usable as the internal coagulant may be water, ethylene glycol, an alcohol solvent, a ketone solvent, polyalkylene glycol, or a mixture of two or more thereof.

The internal coagulant may include the good solvent and the non-solvent in a weight ratio of 3:1 to 1:3.

The preparation method of the hollow fiber membrane of the exemplary embodiment may further include maintaining the temperature of the polymer resin composition for preparing the hollow fiber membrane mixed with the internal coagulant at 5 to 30 °C. The heated polymer resin composition for preparing the hollow fiber membrane and the internal coagulant may stay, after being mixed, in the internal coagulation bath or a spinning nozzle serving as the internal coagulation bath, and the temperature at this time may be maintained at 5 to 30 °C.

The polymer resin composition for preparing the hollow fiber membrane mixed with the internal coagulant may be spun in the wet coagulation bath through a spinning nozzle, and by such spinning process in the wet coagulation bath, the hollow fiber membrane as described above may be formed.

The wet coagulation bath is filled with water, and the wet coagulation bath or water therein may be maintained at a temperature of -10 to 30 °C.

The distance between the spinning nozzle and the surface of water in the wet coagulation bath may be 0.5 to 10 cm. The distance between the spinning nozzle and the surface of water in the wet coagulation bath may be a distance where the polymer resin composition for preparing the hollow fiber membrane mixed with the internal coagulant is exposed to external air (air gap).

In order to spin the polymer resin composition for preparing the hollow fiber membrane mixed with the internal coagulant, the spinning nozzle may be connected to a polymer solution transfer line, and also connected to a metering pump for pushing the polymer solution, or to a nitrogen gas supply.

When the polymer resin composition for preparing the hollow fiber membrane mixed with the internal coagulant is stabilized, it should be pushed with a metering pump having a constant flow velocity, or a constant pressure should be applied thereto by opening a valve of a nitrogen gas supply. A discharge speed is generally determined by the pressure of nitrogen gas to be used, and the discharge speed may be controlled by the physical properties or characteristics of the hollow fiber membrane to be prepared, and for example, is 1 to 30 cm/s.

Meanwhile, in order to remove a remaining solvent and the like, the preparation method of the hollow fiber membrane of the exemplary embodiment may include heating the prepared hollow fiber membrane to a temperature of 30 to 100 °C, or carrying out a hot water treatment in a water tank of which the temperature is raised up to the boiling point of water, for 3 to 6 hours.

Further, the preparation method of the hollow fiber membrane of the exemplary embodiment may further include drying the prepared hollow fiber membrane.

Meanwhile, according to another exemplary embodiment of the present invention, a hollow fiber membrane, including a polymer base containing a vinylidene fluoride-based polymer resin and a bicycloalkane having 5 to 15 carbons mono- or poly-substituted with a carboxylic acid metal salt functional group, or a polymer base containing a crosslinked product between decomposed divided bodies of the vinylidene fluoride-based polymer resin by the peroxide, wherein the hollow fiber membrane has an outer diameter of 0.5 to 5 mm and an inner diameter of 0.1 to 4.5 mm, may be provided.

The hollow fiber membrane may have an outer diameter of 0.5 to 5 mm and an inner diameter of 0.1 to 4.5 mm, or an outer diameter of 0.5 to 2 mm and an inner diameter of 0.1 to 1.5 mm.

The hollow fiber membrane prepared through the thermally induced phase separation using the polymer resin composition for preparing the hollow fiber membrane, may have high strength and excellent chemical resistance, while implementing high water permeation, thereby realizing a stable and efficient water treatment. In particular, the polymer base included in the hollow fiber membrane of the exemplary embodiment may contain a polymer resin having high crystallinity and a relatively small crystal size, and thus the strength and the chemical resistance of the hollow fiber membrane may be improved.

Further, in a process of preparing the hollow fiber membrane by the thermally induced phase separation using the polymer resin composition including the peroxide in combination with the vinylidene fluoride-based polymer resin, the good solvent, and the poor solvent, the chain of the vinylidene fluoride-based polymer resin is broken by a radical reaction by the peroxide to form a vinylidene fluoride-based polymer resin with a short chain and a vinylidene fluoride-based polymer resin with a long chain, which form a strong hydrogen bond or a crosslink to form a polymer base of the hollow fiber membrane.

The thus-prepared hollow fiber membrane may have high mechanical strength and chemical resistance, and may also implement extremely high water penetration to realize stable and efficient water treatment. In particular, as the peroxide is used, the crystallinity and the crystallization rate of the polymer resin contained in the base of the hollow fiber membrane may be accelerated, and the crystal size may be refined, and accordingly, the strength and the chemical resistance of the hollow fiber membrane may be improved.

As described above, the hollow fiber membrane of the other exemplary embodiment may include the polymer base containing the crosslinked product between the decomposed divided bodies of the vinylidene fluoride-based polymer resin by the peroxide.

The decomposed divided body of the vinylidene fluoride-based polymer resin by the peroxide means the divided body generated from decomposition of the vinylidene fluoride-based polymer resin in a radical reaction by the peroxide, and the crosslinked product between the decomposed divided bodies of the vinylidene fluoride-based polymer resin by the peroxide means a polymer compound formed by a crosslink or a hydrogen bond between the decomposed divided bodies.

The crosslinked product between the decomposed divided bodies of the vinylidene fluoride-based polymer resin by the peroxide may include the crosslinked copolymer between the decomposed divided bodies of the vinylidene fluoride-based polymer resin by the peroxide.

The hollow fiber membrane prepared through the thermally induced phase separation using the polymer resin composition for preparing the hollow fiber membrane may have high strength and excellent chemical resistance, while implementing high water permeation, thereby realizing stable and efficient water treatment. In particular, the polymer base included in the hollow fiber membrane of the exemplary embodiment may contain a polymer resin having high crystallinity and a relatively small crystal size, and thus the strength and the chemical resistance of the hollow fiber membrane may be improved.

More details of the polymer resin composition for preparing the hollow fiber membrane include the above description of the polymer resin composition for preparing the hollow fiber membrane of the one exemplary embodiment.

The polymer base may have pores having a maximum diameter of 0.001 to 2.0 µm distributed thereon.

The hollow fiber membrane of the exemplary embodiment may have cutting strength of 8.50 N/mm² or more, or 9.00 to 20.0 N/mm². The cutting strength may be measured using Instron equipment. A hollow fiber membrane having a length of 200 mm is prepared, clamped in upper-lower sample grips of the Instron equipment, and drawn to breakage at a draw speed of 100 mm/min. The highest tensile strength at break may be measured as the cutting strength.

The hollow fiber membrane of the exemplary embodiment may have a pure water permeation flux of 250 to 1500 L/m²*h (60 cmHg).

According to exemplary embodiments above, the hollow fiber membrane having high strength and excellent chemical resistance, and implementing high water permeability to enable stable and efficient water treatment, the polymer resin composition for preparing the hollow fiber membrane, and the preparation method of the hollow fiber membrane, may be provided.

The present invention will be described in more detail in the following examples. However, the following examples are only illustrative of the present invention, and do not limit the disclosure of the present invention in any way.

### [Examples and Comparative Examples: Preparation of hollow fiber membrane]

### Example 1

A polymer resin composition including a combined amount of 40 % by weight of polyvinylidene fluoride resin (PVDF) and disodium cis-endo-bicyclo[2.2.1] heptane 2,3-dicarboxylate, 10 % by weight of N-methyl-2-pyrrolidone, and 50 % by weight of gamma-butyrolactone was mixed at 170 °C for 3 hours to prepare a spinning solution. At this time, the content of disodium cis-endo-bicyclo[2.2.1] heptane 2,3-dicarboxylate in the polymer resin composition was 2000 ppmw.

The thus-prepared spinning solution was transferred to a nozzle together with an internal coagulant. A mixture of N-methyl-2-pyrrolidone/polyethylene glycol (PEG) at a weight ratio of 1:1 was used as the internal coagulant. A coagulation bath was filled with water, and the heights of the water in the coagulation bath and the nozzle were spaced 4 cm apart. The temperature of the coagulation bath was maintained at 5 °C, and water was periodically cycled therein.

The PVDF hollow fiber separation membrane which underwent phase transition in the coagulation bath was passed through a wash bath, and wound in a rear part to prepare the PVDF hollow fiber membrane. After the prepared hollow fiber membrane was soaked in ethanol for 24 hours, and the good solvent and the internal coagulant remaining within the separation membrane were removed, the membrane was washed with water, air-dried, and then analyzed.

### Example 2

The hollow fiber membrane was prepared in the same manner as in Example 1, except that the content of disodium cis-endo-bicyclo[2.2.1] heptane 2,3-dicarboxylate in the polymer resin composition was 3000 ppmw.

### Comparative Example 1

The hollow fiber membrane was prepared in the same manner as in Example 1, except that disodium cis-endo-bicyclo[2.2.1] heptane 2,3-dicarboxylate was not added to the polymer resin composition.

### Example 3

The polymer resin composition for preparing the hollow fiber membrane including a combined amount of 40 % by weight of polyvinylidene fluoride (PVDF) resin and a peroxide ((2,5-dimethyl-2,5-di(tert-butylperoxy)hexane)), 10 % by weight of N-methyl-2-pyrrolidone, and 50 % by weight of gamma-butyrolactone was mixed at 170 °C for 3 hours to prepare a spinning solution. At this time, the content of the peroxide in the polymer resin composition was 300 ppmw.

The prepared spinning solution was transferred to a nozzle together with an internal coagulant. A mixture of N-methyl-2-pyrrolidone/polyethylene glycol (PEG) at a weight ratio of 1:1 was used as the internal coagulant. A coagulation bath was filled with water, and the heights of the water in the coagulation bath and the nozzle were spaced 4 cm apart. The temperature of the coagulation bath was maintained at 5 °C, and water was periodically cycled therein.

The PVDF hollow fiber separation membrane which underwent phase transition in the coagulation bath was passed through a wash bath, and wound in a rear part to prepare the PVDF hollow fiber membrane. After the prepared hollow fiber membrane was soaked in ethanol for 24 hours, and the good solvent and the internal coagulant remaining within the separation membrane were removed, the membrane was washed with water, air-dried, and then analyzed.

### Example 4

The hollow fiber membrane was prepared in the same manner as in Example 3, except that the content of the peroxide in the polymer resin composition was 1000 ppm.

### Comparative Example 2

The hollow fiber membrane was prepared in the same manner as in Example 3, except that the peroxide was not added to the polymer resin composition.

### [Experimental Examples: Physical properties measurement and observation of hollow fiber membrane]

### Experimental Example 1: DSC measurement

In order to completely remove the solvent within the hollow fiber membrane samples obtained in the above examples and comparative examples, the membrane was dried in an oven at 120 °C for 24 hours.

Then, in order to remove thermal hysteresis of an initial specimen, the temperature was raised up to 210 °C, stood for 10 minutes, and then the molten specimen was quenched from 210 °C to 5 °C at a rate of -90 °C/min to make the same condition as the hollow fiber spinning condition.

Under this condition, crystallization temperature (Tc), calories (J/g), and crystallization time (s) were measured.

**[Table 1] Result of DSC measurement**

| | DSC | | | |
|---|---|---|---|---|
| | Added amount of disodium cis-endo-bicyclo[2.2.1] heptane 2,3-dicarboxylate | Crystallization temperature (Tc) | Calories (J/g) | Crystallization time (s) |
| Comparative Example 1 | 0 ppm | 120.0 °C | 44.3 | 77.0 |
| Example 1 | 2000 ppm | 126.0 °C | 45.1 | 68.0 |
| Example 2 | 3000 ppm | 127.5 °C | 46.1 | 73.0 |
| Comparative Example 2 | 0 ppm | 120.0 °C | 44.3 | 77.0 |
| Example 3 | 300 ppm | 124.1 °C | 46.5 | 76.2 |
| Example 4 | 1000 ppm | 126.3 °C | 45.9 | 74.0 |

As in Examples 1 and 2, it can be seen that in case of adding disodium cis-endo-bicyclo[2.2.1] heptane 2,3-dicarboxylate, as its added amount was increased, the crystallization temperature (Tc) and calories were raised. This seems to be because disodium cis-endo-bicyclo[2.2.1] heptane 2,3-dicarboxylate caused improvement of the polymer crystallinity, thereby increasing the crystallization temperature, and the polymer chains were crystallized, thereby increasing emitted calories. Further, it was confirmed that the crystallization time was shortened in Examples 1 and 2.

On the contrary, it was confirmed that the crystallization temperature and the calories were lower and consequently phase transition time was longer in Comparative Example 1 than in Examples 1 and 2.

Further, as shown in the above Table 1, in case of adding the peroxide as in Examples 3 and 4, as the added amount was increased, the crystallization temperature (Tc) and the calories were somewhat increased, and the crystallization time was somewhat reduced. This seems to be because the length of the PVDF polymer chain was shortened by breakage by the radical attack of the peroxide, and a molecular weight distribution was relatively narrowed, so that crystal formation became advantageous. Further, it was confirmed that the crystallization time was shortened in Examples 3 and 4.

On the contrary, it was confirmed that the crystallization temperature and the calories were lower and consequently phase transition time was longer in Comparative Example 2 than in Examples 3 and 4.

### Experimental Example 2: Cutting strength

About 200 mm of the hollow fiber membranes obtained from the above examples and comparative examples were prepared. The size of the cross-section of the hollow fiber membrane was measured through a SEM or an optical microscope.

Then, Instron equipment was used to break the membrane, wherein the hollow fiber membrane was clamped in upper-lower sample grips, an effective length between the grips was 100 mm, and the experimental speed was 100 mm/min. The highest tensile strength at break was the cutting strength, and elongation was measured by comparing the length at break with the initial length.

**[Table 2] Result of cutting strength measurement**

| | Cutting strength (N/mm²) |
|---|---|
| Comparative Example 1 | 8.4 |
| Example 1 | 9.3 |
| Example 2 | 13.6 |

In case of adding disodium cis-endo-bicyclo[2.2.1] heptane 2,3-dicarboxylate as in Examples 1 and 2, it was confirmed that as the added amount was increased, the cutting strength was improved.

This seems to be because, due to the dependency of the mechanical property of the polymer base of the hollow fiber membrane on the crystallinity, the crystallinity of the polymer base was improved according to the addition of disodium cis-endo-bicyclo[2.2.1] heptane 2,3-dicarboxylate, thereby improving the cutting strength. On the contrary, it was confirmed that the cutting strength was weaker in Comparative Example 1 than in Examples 1 and 2.

**[Table 2-1] Result of cutting strength measurement**

| | Cutting strength (N/mm²) | Elongation (%) |
|---|---|---|
| Comparative Example 2 | 7.5 | 60 % |
| Example 3 | 11.7 | 190 % |
| Example 4 | 12.4 | 253 % |

As shown in above Table 2-1, in case of adding the peroxide as in Examples 3 and 4, as the added amount is increased, the cutting strength and the elongation were improved. This seems to be because decomposition by the peroxide caused the breakage of a PVDF chain, thereby making the molecular weight distribution narrow to improve rigidity. PVDFs with a short chain formed by decomposition by the peroxide were bonded to PVDFs with a long chain by a strong hydrogen bond, so that they are not decomposed after spinning.

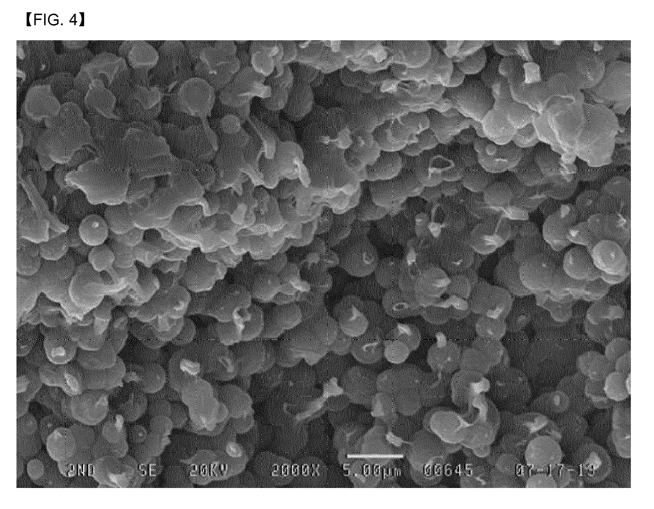

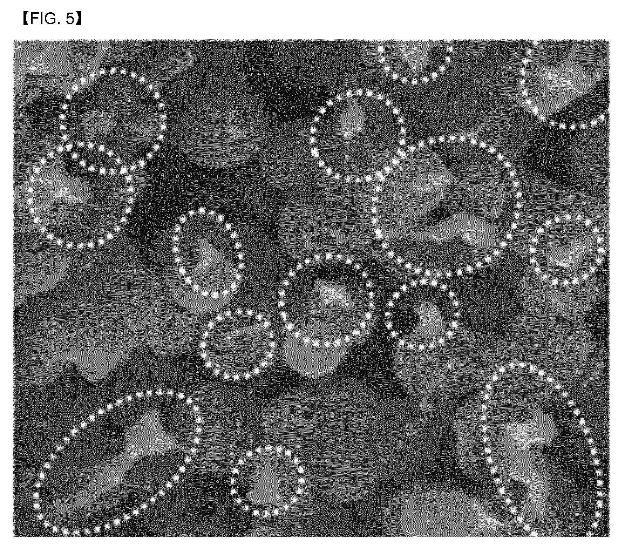

As shown in SEM photographs of FIGS. 4 and 5, it seems that PVDFs with a short chain existed between crystal structures formed by PVDFs with a long chain, and served as a bond, so that the elongation of the entire hollow fiber membrane of PVDF was improved. On the contrary, in case of not adding the peroxide (Comparative Example 2), the cutting strength was weaker than the sample with the peroxide added (Examples 3 and 4).

### Experimental Example 3: Observation of cross-sectional structure of hollow fiber membrane using SEM

The hollow fiber membranes obtained from the examples and comparative examples were dried to measure a SEM image. Specifically, the specimens of the hollow fiber membranes obtained from the examples and comparative examples were treated with liquid nitrogen, and then broken without knife cutting to observe their cross-section.

### (1) Examples 1 and 2 and Comparative Example 1

Through the observed SEM image, an outer diameter (OD) and an inner diameter (ID) were specified. The hollow fiber membranes prepared in Examples 1 and 2 and Comparative Example 1 had an outer diameter of about 1500 µm, a thickness of 170 µm, and a ratio of outer diameter (OD)/inner diameter (ID) of about 1.3.

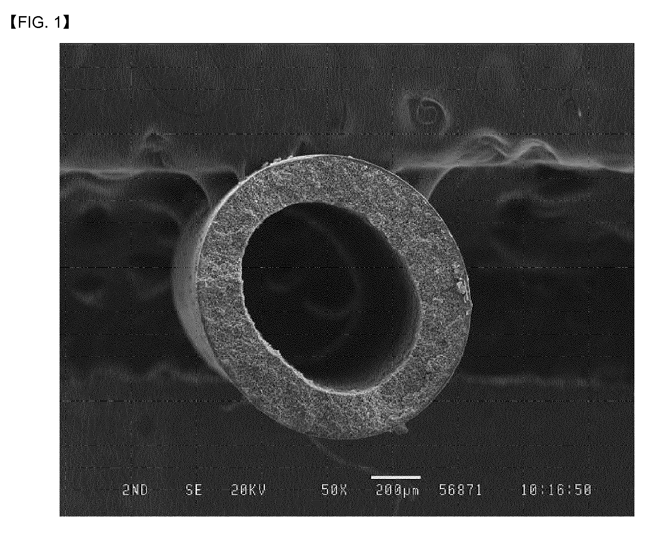

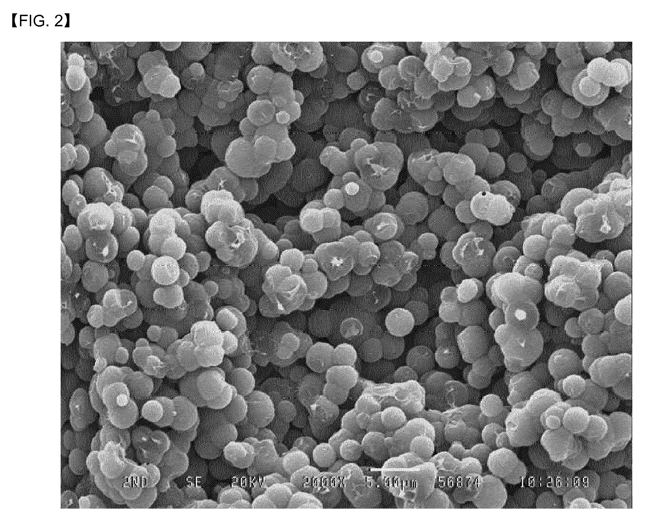

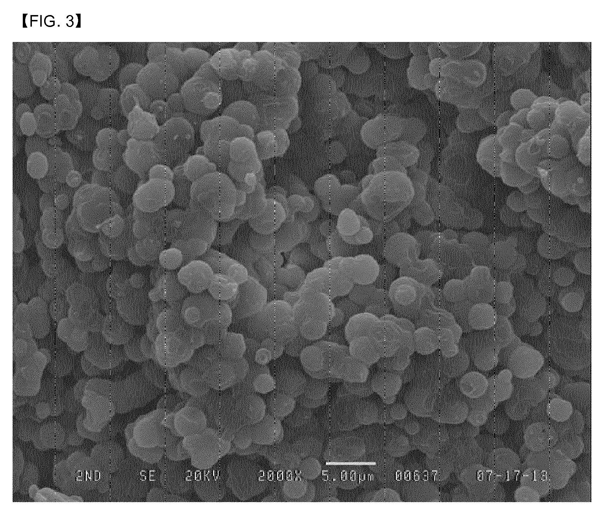

Further, as shown in FIGS. 1 to 3, polymer beads with a relatively small size were formed in Examples 1 and 2 using disodium cis-endo-bicyclo[2.2.1] heptane 2,3-dicarboxylate. Thus, numerous small beads may grow to entirely improve crystallinity and crystallization temperature, and accordingly, it seems that the crystallinity of the polymer base of the hollow fiber membrane of Examples 1 and 2 was relatively more improved to increase the cutting strength.

### (2) Examples 3 and 4 and Comparative Example 2

Through the observed SEM image, an outer diameter (OD) and an inner diameter (ID) were specified. It was confirmed that the hollow fiber membranes prepared in Examples 3 and 4 and Comparative Example 2 had an outer diameter (OD) of about 1400 µm, and an inner diameter (ID) of about 1200 µm.

In addition, as shown in the SEM photographs in FIGS. 4 and 5, it was confirmed that agglomerated polymer lumps existed around PVDF spherical crystals included in the prepared hollow fiber membrane. This seems to be because, as PVDF with a short chain which was cut by the peroxide formed a strong hydrogen bond with PVDF with a long chain, the agglomerated polymer lumps appeared around the crystal beads, after spinning and crystal formation.

## Claims

1. A polymer resin composition for preparing a hollow fiber membrane, comprising: 10 to 70 % by weight of a vinylidene fluoride-based polymer resin;
1 to 70 % by weight of a good solvent;
1 to 75 % by weight of a poor solvent; and
0.001 to 5 % by weight of one or more compounds selected from the group consisting of a bicycloalkane having 5 to 15 carbons mono- or poly-substituted with a carboxylic acid metal salt functional group and a peroxide.

2. The polymer resin composition for preparing the hollow fiber membrane of claim 1,
wherein the vinylidene fluoride-based polymer resin includes one or more selected from the group consisting of a vinylidene fluoride homopolymer and a vinylidene fluoride copolymer.

3. The polymer resin composition for preparing the hollow fiber membrane of claim 1,
wherein the vinylidene fluoride-based polymer resin has a weight average molecular weight of 100,000 to 1,000,000.

4. The polymer resin composition for preparing the hollow fiber membrane of claim 1,
wherein the good solvent includes one or more selected from the group consisting of N-methyl-2-pyrrolidone, dimethylformamide, N,N'-dimethyl acetamide, dimethyl sulfoxide, and hexamethylphosphoric triamide.

5. The polymer resin composition for preparing the hollow fiber membrane of claim 1,
wherein the poor solvent includes one or more selected from the group consisting of dibutyl phthalate, dimethyl phthalate, dioctyl sebacate, dioctyl adipate, gamma-butyrolactone, and propylene carbonate.

6. The polymer resin composition for preparing the hollow fiber membrane of claim 1,
wherein the bicycloalkane having 5 to 15 carbons mono- or poly-substituted with a carboxylic acid metal salt functional group includes bicyclo[2.2.1]heptane or bicyclo[2.2.2]octane mono- to tetra-substituted with a functional group selected from the group consisting of a lithium carboxylate group, a sodium carboxylate group, and a potassium carboxylate group.

7. The polymer resin composition for preparing the hollow fiber membrane of claim 1,
wherein the peroxide includes one or more compounds selected from the group consisting of diisobutyl peroxide, t-amyl peroxydicarbonate, di(4-t-butylcyclohexyl)peroxydicarbonate, diethylhexyl peroxydicarbonate, dibutyl peroxydicarbonate, diisopropyl peroxydicarbonate, dicetyl peroxydicarbonate, dimyristyl peroxydicarbonate, t-butyl peroxyneoheptanoate, t-amyl peroxypivalate, t-butyl peroxypivalate, dilauroyl peroxide, didecanoyl peroxide, 2,5-dimethyl-2,5-di(2-ethylhexanoylperoxy)hexane, 2,5-dimethyl-2,5-di(tert-butylperoxy)hexane, 1,1,3,3-tetramethylbutyl peroxy-2-ethylhexanoate, t-amylperoxy-2-ethylhexanoate, dibenzoyl peroxide, t-butyl peroxy-2-ethylhexanoate, t-butyl peroxydiethyl acetate, t-butyl peroxyisobutylate, and 1,4-di(t-butylperoxycarbo)cyclohexane.

8. A preparation method of a hollow fiber membrane, comprising: heating the polymer resin composition for preparing the hollow fiber membrane of claim 1 to 50 to 175 °C;
mixing the heated polymer resin composition for preparing the hollow fiber membrane with an internal coagulant; and
spinning the polymer resin composition for preparing the hollow fiber membrane mixed with the internal coagulant in a wet coagulation bath.

9. The preparation method of the hollow fiber membrane of claim 8, wherein the internal coagulant includes one or more selected from the group consisting of a good solvent and a non-solvent.

10. The preparation method of the hollow fiber membrane of claim 9, wherein the non-solvent includes one or more selected from the group consisting of water, ethylene glycol, an alcohol solvent, a ketone solvent, and polyalkylene glycol.

11. The preparation method of the hollow fiber membrane of claim 8, further comprising maintaining the polymer resin composition for preparing the hollow fiber membrane mixed with the internal coagulant at a temperature of 5 to 30 °C.

12. The preparation method of the hollow fiber membrane of claim 8, wherein the wet coagulation bath is filled with water and maintained at a temperature of-10 to 30 °C.

13. A hollow fiber membrane, comprising a polymer base containing a vinylidene fluoride-based polymer resin and a bicycloalkane having 5 to 15 carbons mono- or poly-substituted with a carboxylic acid metal salt functional group, or a polymer base containing a crosslinked product between decomposed divided bodies of a vinylidene fluoride-based polymer resin by a peroxide,
wherein it has an outer diameter of 0.5 to 5 mm and an inner diameter of 0.1 to 4.5 mm.

14. The hollow fiber membrane of claim 13, wherein the crosslinked product is a crosslinked copolymer formed by bonding decomposed divided bodies of the vinylidene fluoride-based polymer resin to each other.

15. The hollow fiber membrane of claim 13, wherein pores having a maximum diameter of 0.01 to 5.0 µm are distributed on the polymer base.

16. The hollow fiber membrane of claim 13, wherein it has cutting strength of 8.50 N/mm² or more.

17. The hollow fiber membrane of claim 13, wherein it has a pure water permeation flux of 250 to 1500 L/m²*h (60 cmHg).
